# EUROPÄISCHE PATENTANMELDUNG

(11) **EP 0 742 505 A2**
(43) Veröffentlichungstag der Anmeldung: **13.11.1996**
(21) Anmeldenummer: 96107453.1
(22) Anmeldetag: 10.05.1996
(51) Int. Cl.: G05B 19/4063

(54) **Einrichtung zum sicherheitsgerichteten Überwachen einer Maschine**

(30) Priorität: 11.05.1995 DE 19517377
(71) Anmelder: SIEMENS AKTIENGESELLSCHAFT, 80333 München (DE)
(72) Erfinder: Schleicher, Siegfried Dr.-Ing., 09113 Chemnitz (DE); Schmittele, Max Dipl.-Ing., 91058 Erlagen (DE)

(57) **Zusammenfassung**

Eine höchste Sicherheit zum Betrieb einer Maschine, insbesondere einer Werkzeugmaschine oder eines Roboters, wird bei zweikanaliger Überwachung dadurch erreicht, daß auch die Zustandsparameter getrennt eingeb-, speicher- und ausgebbar sind, daß ferner zwei getrennte Kanalvergleicher vorliegen und bei Abweichungen vorgebbare Fehlerreaktionen anstoßbar sind.

## Beschreibung

Die Erfindung bezieht sich auf eine Einrichtung gemäß dem Oberbegriff des Hauptanspruchs.

Bislang sind für Maschinen, z.B. Werkzeugmaschinen oder Roboter, sicherheitsgerichtete Steuerungen mit mindestens zwei unabhängigen Kanälen meist so realisiert, daß das Ergebnis der Steuerkanäle als gültig betrachtet wird, wenn es in mindestens zwei Kanälen übereinstimmend ermittelt wird. Ergebnisungleichheit signalisiert einen Fehler in einem der Kanäle. Es wird dabei davon ausgegangen, daß in beiden Kanälen nicht gleichzeitig der gleiche Fehler auftritt (Einfehlersicherheit). Bei einem Fehler gibt es keine Übereinstimmung im Ergebnis.

Die gattungsgemäße, in der DE-OS 43 43 073 beschriebene Achspositionsüberwachung arbeitet gleichfalls zweikanalig und nach diesem eingangs beschriebenen Übereinstimmungsprinzip. Gesondert werden dabei zur Aufdeckung von Geberfehlern auch die Geberwerte auf Übereinstimmung kontrolliert. Weitergehende Maßnahmen sind nicht aufgezeigt, die darauf gerichtet sein könnten, die prozessorgestützten Realisierungsmittel wichtiger Teile des Überwachungszweiges in sicherheitsgerichteter Technik auszuführen bzw. die erforderliche Software sicherheitsgerichtet zu erstellen und zu überprüfen.

Durch die frühzeitige Aufdeckung schlafender Fehler in den prozessorgestützten Realisierungsmitteln, wie Speicherfehlern, falschen Sprungbefehlen oder logischen Programmfehlern, könnte vielfach vermieden werden, daß der Achszustand erst in den unzulässigen Bereich wechseln muß, ehe der Fehler in der Überwachung am ungleichen Überwachungsergebnis detektierbar wird. Die Fehlerauswirkung des schlafenden Fehlers tritt oft erst im unzulässigen Achszustand in Erscheinung, weil beispielsweise dann erst bis dahin nicht durchlaufender Software-Code durchlaufen wird, in welchem im Laufe der Zeit eine Fehlereinwirkung eingetreten ist. Es können auch fehlerhafte Daten sein, auf die erst mit dem neu durchlaufenen Code zurückgegriffen wird. Mit der bislang üblichen Fehleraufdekkungsmaßnahme durch den kreuzweisen Ergebnisvergleichstest werden viele _{"}Einzelfehler" in der Überwachungsfunktionalität somit erst detektiert, wenn bereits in den unzulässigen Bereich des Achs-Istzustandes hineingefahren wurde.

Aufgabe der vorliegenden Erfindung ist, eine Einrichtung der eingangs genannten Art mit höchster Sicherheit für den Betrieb zu schaffen.

Gemäß der Erfindung wird diese Aufgabe durch das Kennzeichen des Hauptanspruchs gelöst. Weitere vorteilhafte Ausbildungen der Erfindung gemäß den Unteransprüchen werden im Zusammenhang mit dem Ausführungsbeispiel beschrieben.

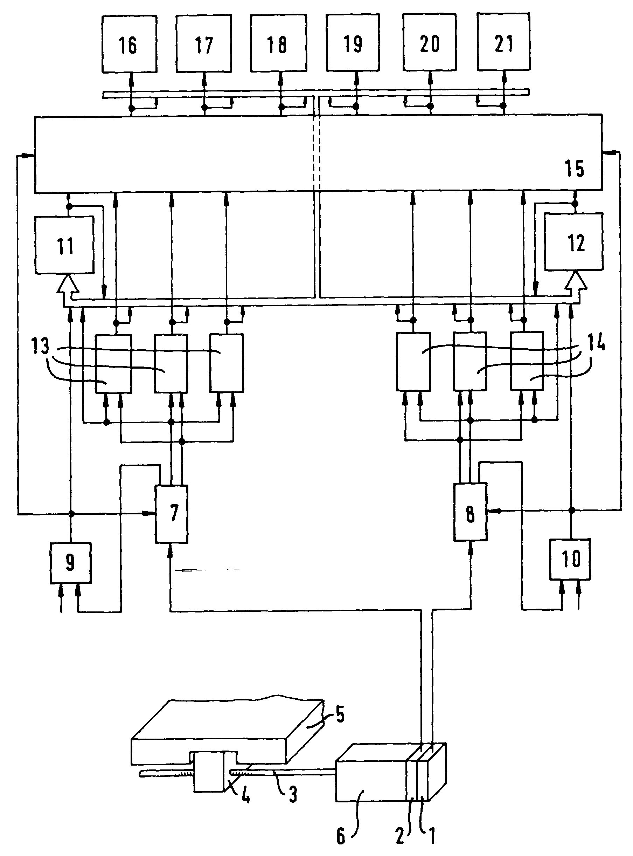

Dieses wird anhand der Figur gezeigt und im folgenden näher erläutert.

Die Darstellung zeigt den im wesentlichen zweikanaligen Aufbau einer Achszustandsüberwachung für verschiedene Achszustandsgrößen Position, Geschwindigkeit und Beschleunigung. Beim hier gezeigten Gebersystem kommen zwei inkrementale Gebersysteme 1 und 2 in einer Anbaueinheit zum Einsatz, welche indirekt am Motor 6 angebaut ist. Über eine Spindel 3 und eine Mutter 4 mag dabei ein Tisch 5 bewegt werden. Die eigentliche Istwertbildung und Umrechnung zur erforderlichen einheitlichen Istwertauflösung für die Überwachung erfolgt in je einer kanaleigenen Umrecheneinheit 7 und 8, deren Ausgang als Istwertausgang auf die Istwert-Eingänge der einzelnen Überwachungen 13 und 14 geschaltet ist. Die Umrechen-Einheit 7 und 8 benötigt zur Istwertbildung auf die absolute Tischposition neben dem inkrementalen Geber-Istwertsignal aus 1 und 2 noch vorgebbare Daten beispielsweise zur Auflösungsumrechnung sowie zum Referenzieren, um den beliebigen Gebernullpunkt bzw. Referenzpunkt zum Achsnullpunkt mittels Referenzpunktwert umzurechnen.

Diese vorgebbaren Daten werden je Kanal ausgehend von getrennter Eingabe in die Speicherblöcke 9 und 10 geschrieben. Die drei Überwachungen 13 und 14 benötigen neben den Istwert noch den Überwachungsgrenzwert, und zwar in der gleichen Auflösung wie beim Istwert. Die Umrechnung des Überwachungsgrenzwertes auf die einheitliche Überwachungsauflösung erfolgt gleichfalls in den Umrechnungseinheiten 7 und 8. Die einheitliche Auflösung der jeweils korrespondierenden Istwerte und der korrespondierenden Sollwerte ist für die in den Kanalvergleichseinheiten 11 und 12 ausgeführten Kanalvergleichstest Voraussetzung. Die erforderlichen Überwachungsgrenzwerte und die erforderlichen Umrechnungsparameter werden von den zueinander unabhängigen, kanalzugeordneten Speicherblöcken bereitgestellt. Die Eingabe dieser zu speichernden Werte erfolgt mittels getrennter, voneinander unabhängiger Eingaben. Diese Zweikanaligkeit ist hier durch den sicherheitsrelevanten Einfluß dieser Daten notwendig. Die Sicherheitsrelevanz beschränkt sich nicht nur auf den Absolutoffset bzw. Referenzpunktwert. So würde auch bei nur einer Geschwindigkeitsüberwachung ein fehlerhaft nur einkanalig bereitgestellter Umrechnungsparameter zum Sicherheitsverlust führen.

Die beiden Inkrementalerfassungssysteme der Geber 1, 2 benötigen je einen hier nicht dargestellten Referenzpunktgeber, auf den sie beim Referenzieren hingefahren werden. Am Referenzpunkt angekommen, wird jeweils der in den Speicherblöcken 9 und 10 gespeicherte kanaleigene Referenzpunktwert gesetzt, womit die beiden von den Umrechnungseinheiten 7 und 8 bereitgestellten Istwerte den Zustand _{"}referenziert" erreicht haben. Dieser erreichte Zustand ist in den Speicherblöcken 9 und 10 somit gleichfalls getrennt als Zustandsparameter-Datum der Überwachung speicher- und auslesbar. Der Referenzpunktwert wird jeweils bei der Inbetriebnahme ermittelt und getrennt in die Speicherblöcke 9 und 10 eingegeben.

Die Ausgangssignale der Überwachungen 13, 14 sind über den programmierbaren Durchschalter 15, der seine Vorgabe-Daten von den kanalzugeordneten Speicherblöcken 9 und 10 erhält, auf eine der Überwachungs-Reaktionseinheit 16 bis 21 geschaltet. Damit ist es möglich, für unterschiedliche Betriebszustände, z.B. unterschiedliche STOP-Reaktionen, und bei Fehlererkennung in den Kanalvergleichern 11 und 12 vorgebbare Fehlerreaktionen auszulösen.

Je Kanal ist eine Kanalvergleichseinheit 11, 12 vorhanden, auf deren Eingänge kreuzweise alle sicherheitsrelevanten Parameter- und Überwachungssollwerte sowie Zustandsparameter für die Überwachungen 13, 14 und die Istwerte und Überwachungsgrenzwerte von 7 und 8 sowie auch die Ausgangswerte der Überwachungen 13, 14 und auch die Reaktionssignale aus dem Durchschalter 15 (Ergebniswerte) vom eigenen Kanal als auch vom anderen Kanal aufschaltbar sind. Die beiden Kanalvergleichseinheiten 11, 12 überprüfen durch ihren Vergleich der obengenannten Daten alle sicherheitsrelevanten Vorgabe-Daten, aktuelle Zustandsparameter sowie die berechneten Zwischenergebnisse und schließlich auch das Überwachungsergebnis auf noch vorhandene Überwachungsfunktionalität. Eine Abweichung beim Vergleich zweier korrespondierender Daten signalisiert, daß die Funktionsfähigkeit und damit die geforderte Sicherheit nicht mehr gegeben ist. Dieser Test wirkt sehr komplex und deckt die negativen Einflüsse der unterschiedlichsten Fehler auf, da auch die Testergebnisse wieder kreuzweise testbar sind, wird die Test-Software jedes Kanals auch auf Fehlerfreiheit überprüft, ohne daß dazu im einzelnen eine der sonst üblichen Software-Sicherheitsmaßnahmen vorgenommen werden muß. Aus der Analyse eines Vergleichsergebnislisten-Trace kann auf die spezielle Fehlerquelle geschlossen werden. Der Ausgang von 11, 12 ist gleichfalls über den Durchschalter 15 auf die vorgebbaren Überwachungs- und Fehlerreaktionseinheiten 16 bis 22 geschaltet. Damit erfolgt das Auslösen einer entsprechend vorgebbaren Fehlerreaktion, meist sogar, bevor der Fehlereinfluß zu einer sicherheitsgefährdenden Situation führt.

Neben diesen hier aufgezeigten unabdingbaren Maßnahmen zur Selbstüberwachung können die bekannten Überwachungen für Einund Mehrprozessorsysteme zur weiteren Erhöhung der Sicherheit angewendet werden, weil sich die Maßnahmen ergänzen und sich nicht negativ gegenseitig beeinflussen.

Zu den wesentlichen Merkmalen dieser Systemstruktur der Erfindung sei folgendes zum neuen Handvergleichstest ausgeführt.

Es werden nun alle zur prozessorgestützten Überwachung vorgebbaren Daten sicherheitsgerichtet eingeb-, speicher- und auslesbar gestaltet, d.h. wenn ein Fehler bei den vorgenannten Operationen auftreten sollte, muß dieser aufgedeckt werden. In der Softwaretechnologie sind entsprechende Maßnahmen bekannt, um dieses Ziel zu erreichen. Diese bekannten Maßnahmen wie Prüfsummen-CRC-Checks usw. sind aber zur prozeßbegleitenden Fehleraufdeckung sehr aufwendig und dann immer noch lückenhaft. Damit ist auch der Zertifikationsprozeß der sicherheitsgerichteten Software gleichfalls äußerst aufwendig.

Erfindungsgemäß wird mit einer veränderten Aufbau- und Wirkungsstruktur der zweikanaligen Überwachung, zu sehr umfangreichen prozessorgestützten kreuzweisen Kanaltests übergegangen, die bereits auch vorgelagerte Fehler aufdecken können. Dieser hohe Umfang ist möglich, weil die Kanaltests nicht im eigentlichen Überwachungstakt, sondern in wesentlich niederprioren Zeitscheiben laufen können, ohne daß sie an Wirksamkeit verlieren.

Zum Erreichen des obengenannten Zieles werden alle zur prozessorgestützten Überwachung vorgebbaren Daten und alle internen Daten der aktuellen Zustandsparameter der Überwachung je Kanal getrennt eingeb-, speicher- und auslesbar gestaltet und quasi parallel, im Hintergrund zur Überwachung, in einer niederprioren Zeit scheibe werden die paarweise korrespondierenden Daten jeweils einem Kanalvergleichstest zwecks Fehleraufdeckung unterzogen.

Die aus den Achsistzustands-Geberdaten und den vorgebbaren Daten durch Umrechnung hervorgehenden Daten werden gleichfalls einem Kanalvergleichstest unterzogen. Damit werden Umrechnungsfehler aufgedeckt. Alle Kanaltests der paarweise korrespondierenden Daten werden im eigenen Kanal, sowie im anderen Kanal ausgeführt. Bei fehlender Übereinstimmung der paarweisen Daten ist durch jeden Kanalvergleicher eine vorgebbar Fehlerreaktion anstoßbar. Die vorgebbaren Daten umfassen mindestens Überwachungsgrenzwerte, sicherheitsgerichtete Anwahlparameter für die Überwachung und die vorgebbaren Fehlerreaktion, sowie die Meßauflösung und Abtastzeit berücksichtigende Umrechnungsparameter für Überwachungsgrenzwerte und -istwerte. Die Kanalvergleichsdaten sind auf einen Zeitpunkt bezogen paarweise korrespondierend auslesbar.

Die Daten korrespondierender Überwachungsgrenzwerte und korrespondierender Achsistzustände sind mittels ausgelesener vorgebbarer Daten auf ein einheitliches Auflösungsformat umrechenbar, da auch die eigentliche Überwachung in diesem Format vorgenommen wird. Der Kanalprozessor führt in vorteilhafter Weise den Kanalvergleich in nachfolgender Abarbeitungsfolge aus: Lesen der paarweise korrespondierenden Vergleichsdaten vom eigenen und anderen Kanal _{"}L", Vergleich mit dem korrespondierenden Daten _{"}V", Umrechnungen für den nächsten Vergleichstakt _{"}B" und neuen Wert für sich und den anderen Kanal getrennt schreiben _{"}S".

Die Fehleraufdeckung ist so durch die umfangreichen und wirkungsmäßig auch vorgelagerten Tests über das Überwachungsergebnis und den Geberwert hinaus ausgedehnt, um insbesondere schon solche Fehler bzw. Fehlereinwirkungen aufzudecken, die im _{"}gut"-Achszustand noch keine negative Auswirkung auf die momentane Sicherheit des Achszustandes haben. Damit wird für viele Fälle verhindert, daß der Achszustand bei anstehendem Fehler in einen Gefahrenbereich kommen kann und erst dann in diesem gefährlichen Achszustand aus den aktuellen Überwachungsergebnis ein nur globaler Fehler detektiert werden kann. Durch die neuen Kanalvergleichstests werden Fehlerursachen in einer prozessorgestützten Überwachung schnell und speziell ermittelt, was Voraussetzung auch für eine schnelle Behebung ist und was allgemein die Sicherheit erhöht.

Alle vorgebbaren Daten für die Überwachung sind jetzt sicherheitsrelevant, d.h. im vorliegenden Fall, je Kanal getrennt eingeb- und speicherbar. In kreuzweisen Kanalvergleichstests sind diese Daten jetzt auf fehlerhafte Veränderungen überprüfbar, ohne daß die bekannten obengenannten Software-Maßnahmen zur Fehleraufdeckung im einzelnen angewendet werden müssen. Sicherheitsrelevante Daten sind hier der Überwachungs-Istwert, die Überwachungsgrenzwerte und die Parameterwerte für Formatumrechnungen, sowie konstante Parameter, wie beispielsweise Absolutoffset oder Referenzpunktwert und auch die Anwahlparameter und Ausgabesignale für die vorgebbare Überwachungsfunktionalität SBH (sicherer Betriebshalt), SG (sichere Geschwindigkeit), SN (sicherer Nocken), SE (sichere Endlage) oder auch Getriebeschaltstellungen und zugehörige Faktoren.

Die Überwachungsergebnisse können gleichfalls rechenzeitsparend in der niederprioren Zeit scheibe in einen Kanaltest einbezogen werden, weil jetzt das Überwachungsergebnis eines jeden Kanals ohne Übereinstimmung als gültig angesehen wird. Die Übereinstimmungsvoraussetzung wurde fallengelassen, da jetzt schneller und damit sicherer auf einen gefährlichen Zustand reagiert wird. Auch wenn ein Fehler erst am Ende des Überwachungskanals eine unzulässige Überschreitung vortäuschen würde, so ist die ausgelöste Überschreitungs-Reaktion der sichere Fall. Andernfalls, wenn eine Auslösung fehlerhaft unterdrückt wird, reagiert der andere Kanal ordnungsgemäß, weil unwahrscheinlich ist, daß ein zweiter gleicher oder anderer Fehler im anderen Kanal zur gleichen Zeit auftritt. Später würde in beiden Fällen ohnehin auch noch der Kanaltest des Überwachungsergebnisses diesen Fehler detektieren. Die Ergebnisse der Selbstüberwachungstests sind gleichfalls einem Kanaltest unterziehbar. Damit wird die Kanaltest-Software auch auf Fehlerfreiheit überprüft.

Die neuen kreuzweisen Kanalvergleiche müssen nicht im hochprioren Überwachungstakt laufen, sondern können jetzt rechenzeitsparend niederprior zum Überwachungstakt durchgeführt werden. Sie dienen nur der Fehleraufdeckung und nicht der Auflösung der Überwachungs-"Unzulässigreaktion", Voraussetzung dafür ist, daß die bislang betrachtete Ergebnisübereinstimmung als Voraussetzung für das Einleiten der _{"}Unzulässigreaktion", fallengelassen wurde. Jeder Kanal arbeitet autonom und löst bei von ihm allein detektiertem unzulässigem Achszustand die Fehlerreaktion aus.

Die Erfindung kann prinzipiell auch für andere Maschinen mit Sicherheitsbedürfnis verwendet werden.

## Patentansprüche

1. Einrichtung zum sicherheitsgerichteten Überwachen einer Achse einer Maschine mit getrennten Prozessor-, Achs-Istzustandserfassungssystem, Kanalübereinstimmungstest und Zwangsdynamisierung zur Fehleraufdeckung, **dadurch gekennzeichnet,** daß zur prozessorgestützten Überwachung die vorgebbaren Daten und die Daten der aktuellen Zustandsparameter der Überwachung je Kanal getrennt eingeb-, speicher- und auslesbar sind, die ausgelesenen Daten und die aus den Achsistzustands-Geberdaten durch Umrechnung hervorgehenden Daten einem Kanalvergleicher im eigenen Kanal sowie im anderen Kanal zuführbar sind und bei fehlender Übereinstimmung der paarweisen Daten durch den Kanalvergleicher eine vorgebbare Fehlerreaktion anstoßbar ist.

2. Einrichtung nach Anspruch 1, **dadurch gekennzeichnet,** daß die vorgebbaren Daten mindestens Überwachungsgrenzwerte, sicherheitsgerichtete Anwahlparameter für die Überwachung und die vorgebbaren Fehlerreaktionen, sowie die Meßauflösung und Abtastzeit berücksichtigende Umrechnungsparameter für Überwachungsgrenzwerte und -Istwerte umfassen.

3. Einrichtung nach Anspruch 1 oder 2, **dadurch gekennzeichnet,**, daß die Kanalvergleichsdaten auf einen Zeitpunkt bezogen paarweise korrespondierend auslesbar sind.

4. Einrichtung nach Anspruch 1, 2 oder 3, **dadurch gekennzeichnet,** daß die Daten korrespondierender Überwachungsgrenzwerte und korrespondierender Achsistzustände mittels ausgelesener vorgebbarer Daten auf ein einheitliches Auflösungsformat umrechenbar sind.

5. Einrichtung nach einem der vorstehenden Ansprüche, **dadurch gekennzeichnet,** daß die Daten der aktuellen Zustandsparameter der Überwachung je Kanal aktuelle Zustände des Überwachungszweiges, aktuelle Überwachungsergebnisse, aktuelle Überwachungsreaktionssignale und Ergebnisdaten der zurückliegenden Kanaltests umfassen.

6. Einrichtung nach einem der vorstehenden Ansprüche, **dadurch gekennzeichnet,** daß der Prozessor beim Kanalvergleich jeweils die paarweise korrespondierenden Vergleichsdaten vom eigenen und anderen Kanal liest, den Vergleich mit dem korrespondierenden Daten ausführt, Umrechnungen für den nächsten Vergleichstakt ausführt und den neuen Wert für sich und den anderen Kanal getrennt schreibt.
